# EUROPÄISCHE PATENTANMELDUNG

(11) **EP 2 397 812 A1**
(43) Veröffentlichungstag der Anmeldung: **21.12.2011**
(21) Anmeldenummer: 11005042.4
(22) Anmeldetag: 21.06.2011
(51) Int. Cl.: G01B 3/06

(54) **Massstab mit Tonerzeugungsvorrichtung**

(30) Priorität: 21.06.2010 DE 202010009324 U
(71) Anmelder: Ciftci, Okan, 96135 Stegaurach (DE); Fidan, Cetin, 96120 Bischberg (DE)
(72) Erfinder: Ciftci, Okan, 96135 Stegaurach (DE); Fidan, Cetin, 96120 Bischberg (DE)
(74) Vertreter: Eisenführ, Speiser & Partner

(57) **Zusammenfassung**

Ein Maßstab 10 zum Ablesen von Entfernungen weist eine Tonerzeugungsvorrichtung 25 am Maßstabköper auf.

## Beschreibung

Die Erfindung betrifft einen Maßstab zum Ablesen von Entfernungen.

Gliedermaßstäbe sind als Meterstäbe oder Zollstöcke bekannt, die unter anderem im Bauwesen eingesetzt werden, um Abstände von Bauteilen zu ermitteln oder Entfernungen auf Flächen zu markieren. Auch werden Gliedermaßstäbe in sehr großen Stückzahlen weltweit in den verschiedensten Geschäftsbereichen als Werbeträger genützt.

Im Allgemeinen wird die Werbung durch ein Druckverfahren wie z.B. Tampon-, Digital- oder Laserdruck an den Gliedermaßstab angebracht und ist somit nur visuell wahrnehmbar. Ein großer Nachteil der gegenwärtigen Gliedermaßstäbe als Werbeträger ist, dass es durch den Überfluss am Markt ein billiger Wegwerfartikel geworden ist und aus ökonomischen Gründen eher unvorteilhaft ist. Die Werbung wird nicht mehr vom Nutzer wahrgenommen, weil der Markt überfüllt mit minderwertigen Billigartikeln ist und der Nachschub als Giveaway/Werbegeschenk für den Verbraucher sichergestellt ist. Auch für die Firmen, die den Gliedermaßstab als Werbeträger nützen, ist es schwieriger die Werbebotschaft beim Kunden anzubringen, da der Markt mit Gliedermaßstäben mit aufgedruckter Werbung überfüllt ist.

Es sind Messgeräte bekannt, die neben dem Ablesen von Entfernungen zusätzliche Funktionen erfüllen können. So ist aus der 20 2009 008 715.8 beispielsweise ein Gliedermaßstab mit einem Leuchtelement bekannt, welcher auch in der Dämmerung, bei Nacht oder in einem dunklen Bereich verwendet werden kann.

Die Aufgabe der Erfindung besteht darin, einen Maßstab, insbesondere Gliedermaßstab bereitzustellen, der eine zusätzliche Funktion aufweist. Hierzu ist am Maßstabkörper eine Tonerzeugungsvorrichtung vorgesehen. Diese kann einen integrierten Tonträger mit Elektronikbauteilen und Tonwiedergabevorrichtung aufweisen. Hierdurch kann die Speicherung und Wiedergabe von akustischen Signalen wie Musik oder Sprachaufzeichnungen ermöglicht werden. Dadurch gewinnt der Gliedermaßstab an Wert, ist werbeeffektiver, wird länger in Gebrauch genommen und wird damit auch ökonomischer.

Zu diesem Zweck sieht die Erfindung einen Maßstab oder Zollstock, insbesondere Gliedermaßstab zum Ablesen von Entfernungen vor, wobei tonaufzeichnende oder/und tonerzeugende Elemente, wie z.B. Tonträger, Tonaufzeichnungsvorrichtungen, Lautsprecher, Wiedergabevorrichtungen und die noch dazu benötigten Elektronikbauteile vorgesehen sind.

Dabei können die tonerzeugenden Elemente und zugehörigen Bauteile insbesondere der Elektronik im Wesentlichen in den Gliedermaßstabkörper integriert sein.

Ein Gliedermaßstab mit einem integrierten Tonträger und Tonwiedergabevorrichtung kann eine aufgezeichnete Sprachnachricht oder Musik oder sonstige akustische Signale wiedergeben.

Vorzugsweise ist die Tonerzeugungseinrichtung in dem Gliedermaßstab integriert, d.h. die Tonerzeugungseinrichtung und die Elektronikbauteile sind Teil des Gliedermaßstabs, wobei sie an einem bestimmten Glied des Maßstabs angebracht oder einstückig mit diesem ausgebildet sein können.

Insbesondere ist eine Schaltervorrichtung vorgesehen, mittels der die Tonerzeugungsvorrichtung ein- und/oder ausschaltbar ist. So kann die Tonwiedergabe mittels der Schaltervorrichtung bei Bedarf ein- oder ausgeschaltet werden.

Gemäß einer Ausführungsform ist die Schaltervorrichtung ein Schiebeschalter, oder ein Tastschalter oder ein Druckschalter.

Auch kann die Tonwiedergabe durch Aufklappen eines Gliedes oder durch einen Bewegungsmelder oder durch Erschütterung oder durch ein akustisches Signal oder durch einen anderen Mechanismus ausgelöst werden.

Vorzugsweise ist mindestens eine Batterie für die Tonaufzeichnung oder/und Tonwiedergabe vorgesehen. Dabei können die Batterien aufladbar sein, wobei es denkbar ist, dass der gesamte Maßstab in eine Ladestation gesteckt wird.

Insbesondere kann die Batterie in das Material des Maßstabs eingebettet sein.

Der Maßstab kann mit ein oder mehreren Gliedern ausgebildet sein. Vorzugsweise ist der Maßstab ein Gliedermaßstab mit mehreren Gliedern. Die einzelnen Glieder sind beispielsweise miteinander vernietet, so dass der Maßstab zusammenfaltbar ist.

Auch können die Glieder oder einzelne Glieder mittels Verbindungselemente miteinander verbunden sein, weshalb einzelne Glieder ausgetauscht werden können. Zur lösbaren Verbindung können Druckknöpfe oder Schrauben verwendet werden.

Der Maßstab kann eine Länge von 0,5m, 1m, 2m, 3m, 4m, 5m usw. aufweisen.

Vorzugsweise ist/sind der Tonträger oder/und das Tonwiedergabemodul an einem Endglied des Gliederzollstocks angeordnet.

Weitere Merkmale und Vorteile der Erfindung ergeben sich aus der nachfolgenden Beschreibung und den Zeichnungen. Die Erfindung wird anhand verschiedener Ausführungsformen beschrieben. In den Zeichnungen zeigen:
- Figur 1: eine Draufsicht eines erfindungsgemäßen Maßstabgliedes gemäß einer ersten Ausführungsform mit Tonwiedergabevorrichtung;
- Figur 2: eine Figur 1 entsprechende Seitenansicht des in Figur 1 gezeigten Maßstabs mit Tonerzeugungsvorrichtung;
- Figur 3: eine teilweise geschnittene Draufsicht auf einen erfindungsgemäßen Zollstock mit Blick auf die Elektronik und Tonerzeugungsvorrichtung im Maßstabglied;
- Figur 4: eine Draufsicht eines erfindungsgemäßen Maßstabs ohne Tonerzeugungsvorrichtung mit vorgesehener Aussparung für einen Lautsprecher;
- Figur 5: eine der Figur 4 entsprechende teilweise geschnittene Draufsicht mit Sicht auf den innenliegende Hohlraum/Tasche für die Tonerzeugungsvorrichtung;
- Figur 6: eine Frontansicht eines Zollstocks entsprechend dem Ausführungsbeispiel ohne Elektronik mit Hohlraum für die Elektronik;
- Figur 7: eine teilweise geschnittene Draufsicht auf ein Maßstabglied und die Tonerzeugungsvorrichtung in noch nicht zusammengebauten Zustand;
- Figur 8: eine teilweise geschnittene Draufsicht auf ein Maßstabglied in zusammengebauten Zustand.

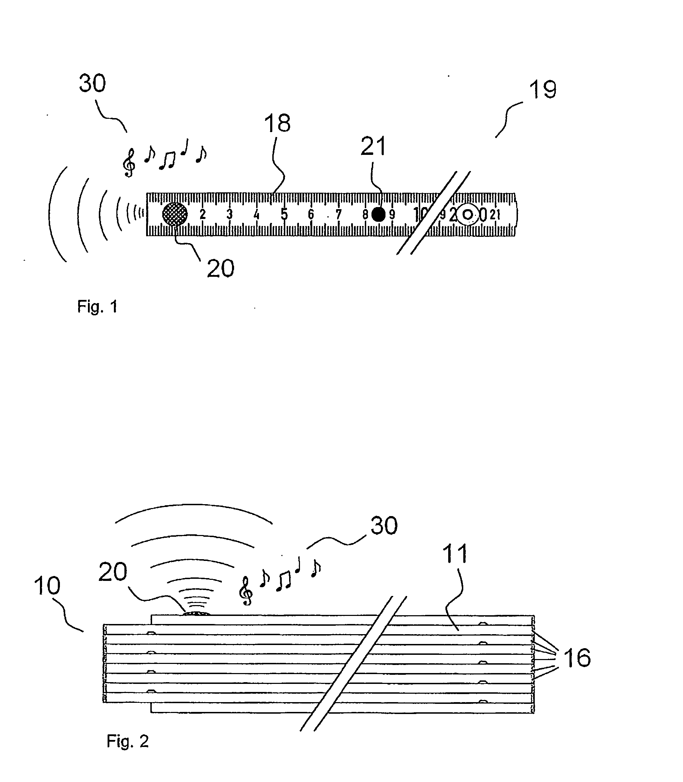

In den Figuren 1 und 2 ist ein Maßstab 10 gemäß einer ersten Ausführungsform gezeigt. Der Maßstab 10 dient dem Ablesen von Entfernungen und ist auch als Meterstab oder Zollstock bekannt. Der Maßstab 10 kann vorzugsweise ein Gliedermaßstab mit mehreren Gliedern 16 sein, die miteinander verbunden sind. In der Seitenansicht (Figur 2) sind zehn Glieder 16 gezeigt. Es können auch mehr oder weniger als zehn Glieder vorgesehen sein. Jedes Glied hat eine Maßskala 18, so dass mit dem Maßstab 10 die Länge eines Bauteils oder der Abstand zwischen zwei Bauteilen von der Maßskala 18 abgelesen werden kann.

Bei der in Figur 1 gezeigten Ausführungsform des Maßstabs 10 weist ein oberstes Glied 19 einen Tonträger und eine Tonerzeugungsvorrichtung 25 (nicht sichtbar) auf, die es erlaubt, den Maßstab 10 als ein Akustikgerät zu benutzen, mit dem man Töne 30, z.B. als Musik, Sprachnotizen oder sonstige akustische Signale aufzeichnen oder/und hören kann.

Die Tonerzeugungsvorrichtung 25 kann batterie- oder solarbetrieben sein, wobei als Batterie 23 eine Knopfzelle verwendet werden kann. Auch können aufladbare Batterien 23 verwendet werden. In den Figuren sind mehrere Knopfzellen der Batterie 23 gezeigt.

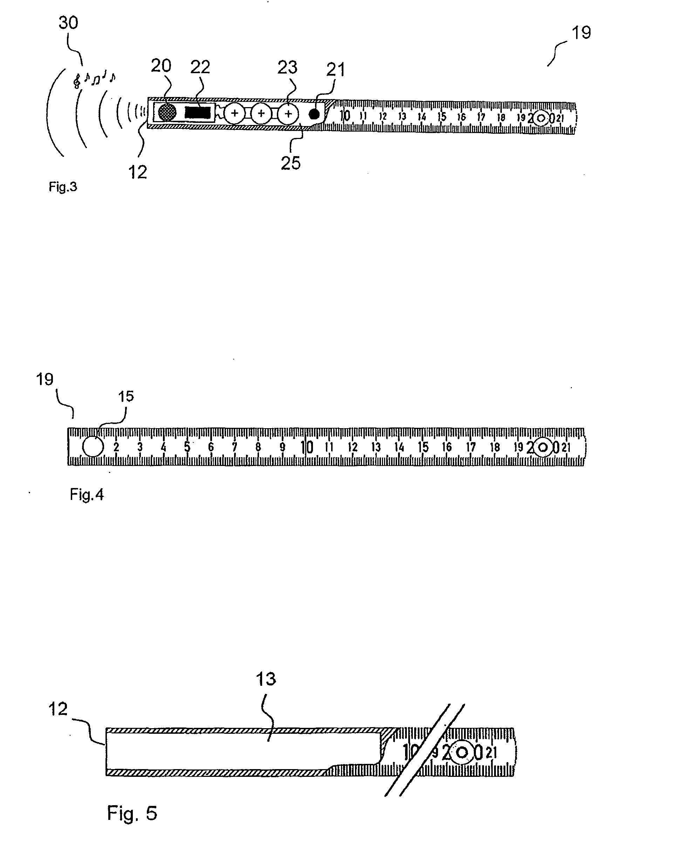

In der in Figur 3 gezeigten Ausführungsform des Maßstabs 10 ist ein Schalter 21 in Form eines Druckschalters vorgesehen. Der Schalter 21 kann auch ein Schiebeschalter, Druckschalter, Tastschalter oder eine andere Schalterart sein. Auch ist es möglich die Schaltfunktion durch Aufklappen des Gliedes 19 oder durch ein Bewegungsmelder oder durch Erschütterung oder durch einen eingebauten Timer in Gang zu setzen.

In der in Figur 3 gezeigten Ausführungsform ist ein Tonwiedergabemodul 20 vorne mittig am obersten Glied 19 sichtbar angeordnet. Das Tonwiedergabemodul 20 an einem oder mehreren anderen Gliedern 16 nicht sichtbar angebracht sein. Insbesondere ist das Tonwiedergabemodul 20 an der oberen Seite des Gliedes 19 angeordnet. Das Tonwiedergabemodul 20 kann auch außermittig oder seitlich am Maßstab 10 oder Zollstock angeordnet sein.

Die Tonerzeugungsvorrichtung 25 ist in das Maßstabglied 19 des Maßstabs 10 integriert, d.h. in eine vorgesehene Aussparung 13 eingesetzt. Auch kann die Tonerzeugungsvorrichtung 25 in das Material des Maßstabgliedes 19 eingebettet sein. Die Tonerzeugungsvorrichtung 25 hat eine niedrige Bauweise und ist bündig eingebettet, so dass der Maßstab 10 in seiner Funktionalität nicht beschränkt wird (Einklappen, Messen usw.).

Bei der in Figur 3 gezeigten Ausführungsform ist die Tonerzeugungsvorrichtung 25 in einen dafür vorgesehenen Hohlraum (Tasche) 13 eingebaut. Die Tonerzeugungsvorrichtung 25, welche einen Tonträger 22, den Lautsprecher 20, die Batterien 23 und den Schalter 21 beinhalten kann, kann von der Stirnseite 12 des Maßstabgliedes 19 eingeschoben werden. Die Vorrichtung 25 kann auch mit einer anderen Einbauvariante eingebaut werden.

In der Figur 4 wird ein Maßstabglied 19 gezeigt in welches die Tonerzeugungsvorrichtung noch nicht eingebaut ist und eine Aussparung 15 für das Tonwiedergabemodul, z.B. den Lautsprecher vorgesehen ist.

Bei der in Figur 5 gezeigten Ausführungsform, welche vorzugsweise aus Kunststoff besteht, ist der Hohlraum (Tasche) 13 für die Tonwiedergabevorrichtung zu sehen. Der Hohlraum (Tasche) 13 wird bei der Herstellung des Maßstabgliedes durch ein spezielles dafür vorgesehenes Spritzwerkzeug in einem Kunststoffspritzverfahren gebildet.

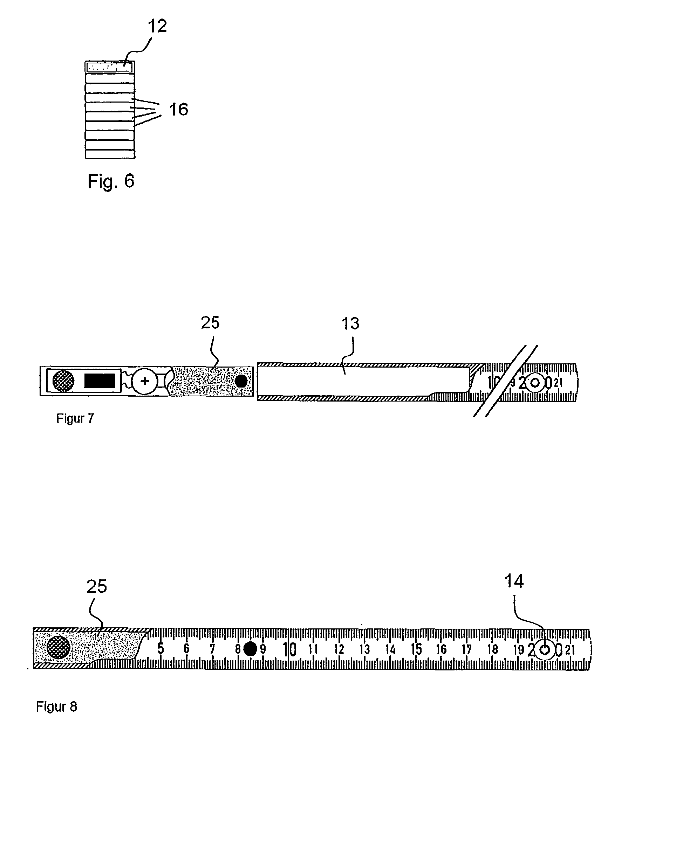

Figur 6 zeigt die Frontansicht eines Maßstabes oder Zollstocks mit dem Hohlraum (Tasche) 13 an der Stirnseite 12 des Maßstabgliedes.

In Figur 7 wird die Tonerzeugungsvorrichtung 25, welche in einem magazinähnlichen Bauteil eingebaut sein kann, in den Maßstab eingeschoben.

In Figur 8 wird die Tonerzeugungsvorrichtung 25 in eingebauten Zustand gezeigt.

Ferner zeigt Figur 8 ein Niet 14, mit dem jeweils zwei Maßstabglieder 12 miteinander verbunden sind. Die Maßstabglieder 12 können auch mittels Druckknöpfe oder Schrauben lösbar miteinander verbunden sein (nicht gezeigt). Dies erlaubt es, einzelne Glieder auszutauschen.

Bei der in Figur 3 gezeigten Ausführungsform ist die Tonerzeugungsvorrichtung 25 in dem dafür vorgesehenen Hohlraum (Tasche) 13 eingebaut. Die Tonerzeugungsvorrichtung 25, welche den Tonträger 22, das Tonwiedergabemodul (Lautsprecher) 20, die Batterien 23 und den Schalter 21 beinhalten kann, kann von der Stirnseite 12 des Maßstabgliedes 19 hereingeschoben werden. Die Tonerzeugungsvorrichtung 25 kann auch mit einer anderen Variante eingebaut werden.

Der Maßstab 10 kann auch einen nicht näher dargestellten Anschluss für einen Kopfhörer aufweisen.

### Bezugszeichen

- 10: Maßstab
- 11: Längsseite des Maßstabs
- 12: Stirnseite des Maßstabsgliedes
- 13: Hohlraum(Tasche)
- 14: Niete
- 15: Aussparung für Lautsprecher
- 16: mehrere Maßstabglieder
- 19: einzelnes Maßstabglied
- 20: Tonwiedergabemodul (Lautsprecher)
- 21: Schaltvorrichtung
- 22: Tonträger
- 23: Batterien
- 25: Tonerzeugungsvorrichtung
- 30: erzeugte Töne (Musik, Sprachaufzeichnung oder akustisches Signal)

## Patentansprüche

1. Maßstab (10) zum Ablesen von Entfernungen, wobei eine Tonerzeugungsvorrichtung (25) am Maßstabkörper vorgesehen ist.

2. Maßstab (10) nach Anspruch 1, **dadurch gekennzeichnet, dass** die Tonerzeugungsvorrichtung (25) in den Maßstab (10) integriert ist.

3. Maßstab (10) nach Anspruch 1 oder 2, **dadurch gekennzeichnet, dass** die Tonerzeugungsvorrichtung (25) Batterie-, Akku- oder solarbetrieben ist.

4. Maßstab (10) nach einem der Ansprüche 1 bis 3, **dadurch gekennzeichnet, dass** die Tonwiedergabe Musik, Sprachaufzeichnung oder ein anderes akustisches Signal ist.

5. Maßstab (10) nach einem der Ansprüche 1 bis 4, **dadurch gekennzeichnet, dass** die Tonerzeugungsvorrichtung (25) auch Elemente mit Aufzeichnungsfunktion aufweist.

6. Maßstab (10) nach einem der Ansprüche 1 bis 5, **dadurch gekennzeichnet, dass** eine Schaltvorrichtung (21) vorgesehen ist, mittels der die Tonerzeugungsvorrichtung (25) ein- und/oder ausschaltbar ist.

7. Maßstab (10) nach Anspruch 6, **dadurch gekennzeichnet, dass** die Tonerzeugungsvorrichtung (25) durch einen Schiebeschalter, Tastschalter, Druckschalter oder durch Aufklappen eines Maßstabgliedes (19) oder durch Bewegungsmelder oder durch Erschütterung oder durch ein akustisches Signal oder durch eine Zeitschaltuhr ein- und/oder ausschaltbar ist.

8. Maßstab (10) nach einem der vorhergehenden Ansprüche, **gekennzeichnet durch** seine Ausbildung als ein Gliedermaßstab mit mehreren Maßstabgliedern (16).

9. Maßstab (10) nach einem der vorhergehenden Ansprüche, **dadurch gekennzeichnet, dass** ein Anschluss für einen Kopfhörer vorgesehen ist.
